Europäisches Patentamt

**European Patent Office**

Office européen des brevets

(19)

(11) Numéro de publication: **0 125 168**
**A1**

(12) # DEMANDE DE BREVET EUROPEEN

(21) Numéro de dépôt: **84400854.0**

(22) Date de dépôt: **26.04.84**

(51) Int. Cl.³: **H 04 L 5/22**

(30) Priorité: **04.05.83 FR 8307438**

(43) Date de publication de la demande:
**14.11.84 Bulletin 84/46**

(84) Etats contractants désignés:
**DE GB NL SE**

(71) Demandeur: **Billy, Jean-Claude**
**Prat Cottel Saint Quay Perros**
**F-22700 Perros-Guirec(FR)**

(72) Inventeur: **Billy, Jean-Claude**
**Prat Cottel Saint Quay Perros**
**F-22700 Perros-Guirec(FR)**

(74) Mandataire: **Mongrédien, André et al,**
**c/o BREVATOME 25, rue de Ponthieu**
**F-75008 Paris(FR)**

(54) **Multiplexeur, démultiplexeur et équipement de multiplexage - démultiplexage à trames reconfigurables.**

(57) L'invention a pour objet un multiplexeur, un démultiplexeur et un équipement de multiplexage-démultiplexage à trames reconfigurables.

Le multiplexeur à trame reconfigurable comprend un multiplexeur synchrone (8), un moyen d'insertion d'un mot de verrouillage de trame (14), un moyen (10) de gestion de la transmission, un moyen de surveillance (16), un microprocesseur (18) pour commander ou communiquer avec les moyens précités. Une base de temps (12) émet des signaux d'horloge et de synchronisation pour émettre une trame. Cette base de temps comprend une mémoire contenant des données qui code la configuration de trame actuelle. Pendant la lecture de cette mémoire par une base de temps rapide, une autre mémoire est remplie par le microprocesseur pour coder une nouvelle configuration de trame.

FIG.3

EP 0 125 168 A1

# MULTIPLEXEUR, DEMULTIPLEXEUR ET EQUIPEMENT DE MULTIPLEXAGE-DEMULTIPLEXAGE A TRAMES RECONFIGURABLES

La présente invention concerne un multiplexeur, un démultiplexeur et un équipement de multiplexage-démultiplexage à trames reconfigurables.

La numérisation des réseaux de transmission nécessite l'utilisation d'équipements de multiplexage-démultiplexage numérique assurant le regroupement d'un certain nombre de canaux d'informations de base dans un canal unique de transmission à plus haut débit. La diversité des équipements de multiplexage de par le monde ne cesse de croître compte tenu du nombre important de débits de base normalisés ou en cours de normalisation (données, codage de la parole, codage des images, etc...), des différents niveaux hiérarchiques normalisés avec standards européen et américain, et enfin des différents types de multiplexage existants, tels que le multiplexage synchrone, le multiplexage avec justification positive ou le multiplexage avec justification positive-négative.

La réalisation d'un équipement de multiplexage nécessite le plus souvent la définition et le développement d'un certain nombre de composants spécifiques à haute intégration ne pouvant généralement pas être utilisés avantageusement dans d'autres équipements de même technologie. Cette méthodologie entraîne une multiplication des études de composants, et donc des coûts élevés d'achat et de maintenance, en particulier pour des matériels fabriqués en petite série.

Par ailleurs, compte tenu de la complexité croissante des réseaux de télécommunications, il devient primordial, lors de l'étude d'un équipement de multiplexage, de concevoir des fonctions d'exploitation approfondies, une surveillance constante de la qualité de la transmission, et une localisation précise et efficace des organes de l'équipement de multiplexage en défaut. Ces fonctions d'exploitation sont généralement réalisées à l'aide de circuits à microprocesseurs. Ce mode de réalisation n'utilise en fait qu'une très faible partie des possibilités techniques des circuits à microprocesseurs et entraîne un coût généralement élevé comparé à la fonction réalisée.

On pourra se reporter à l'ouvrage "Transport et traitement de l'information dans les réseaux et systèmes téléinformatiques", DUNOD, 1979, par C.C. MACCHI et J.F. GUILBERT, et plus particulièrement aux pages 115 à 141 pour une présentation des multiplexeurs et aux pages 371 à 375 pour une présentation de multiplexeurs intelligents appelés concentrateurs.

Un objectif de la présente invention est de procurer un équipement de multiplexage universel quant au débit des canaux composants et du canal résultant. Ceci est obtenu par une paramétrisation de la structure de la trame qui est ainsi adaptée aux débits de ces canaux.

De manière plus précise, l'invention a pour objet un multiplexeur à trame reconfigurable, ladite trame comprenant un mot de verrouillage de trame, des blocs de données et un bloc de service, ledit multiplexeur comprenant :

- un multiplexeur synchrone recevant sur N entrées un nombre N de canaux à bas débit de débits quelconques et délivrant sur un canal de sortie un signal multiplexé,
- un moyen d'insertion d'un mot de verrouillage de trame situé en aval du multiplexeur synchrone,
- une base de temps délivrant des signaux d'horloge et de synchronisation au multiplexeur synchrone et au moyen d'insertion d'un mot de verrouillage de trame,
- un moyen de surveillance pour surveiller l'état des voies composantes et l'état du multiplexeur à trame reconfigurable,

B 7839-C  BL

- un moyen de gestion de la transmission appliquant un signal sur une entrée du multiplexeur synchrone, ledit signal occupant le bloc de service dans la trame,

- un microprocesseur muni de mémoire vive et de mémoire morte, relié au moyen de surveillance, au moyen d'insertion du mot de verrouillage de trame, à la base de temps et au moyen de gestion de la transmission,

- un interface utilisateur relié au microprocesseur, caractérisé en ce que la base de temps comprend :

- une base de temps rapide,

- un commutateur à deux entrées et deux sorties, le microprocesseur étant relié à une entrée dudit commutateur, la base de temps rapide à l'autre entrée dudit commutateur, ledit commutateur ayant en outre une entrée de commande gérée par le microprocesseur pour permuter ses sorties,

- deux moyens de mémorisation adressés chacun par une sortie du commutateur, le moyen de mémorisation adressé par la base de temps rapide au travers du commutateur contenant la configuration de trame actuelle et étant accédé en lecture, le moyen de mémorisation adressé par le microprocesseur au travers du commutateur étant accédé en écriture pour mémoriser une nouvelle configuration de trame,

- un moyen d'élaboration des signaux d'horloge et de synchronisation recevant en entrée le contenu du moyen de mémorisation lu par la base de temps rapide.

Par configuration de trame actuelle, on entend la structure de la trame effectivement émise. Les signaux de synchronisation émis par le moyen de synchronisation peuvent servir à indiquer des bits de justification, des autorisations de justification ou autres. Le multiplexeur à trame reconfigurable décrit fonctionne donc aussi bien avec des canaux synchrones que plésiochrones.

L'invention a également pour objet un démultiplexeur à trame reconfigurable, ladite trame comprenant un mot de verrouillage de trame, des blocs de données et un bloc de service, ledit démultiplexeur comprenant :

- un démultiplexeur synchrone recevant en entrée un signal multiplexé et délivrant en sortie N signaux composants et un signal auxiliaire,
- un moyen de recherche du mot de verrouillage de trame,
- une base de temps délivrant des signaux d'horloge et de synchronisation au démultiplexeur synchrone et au moyen de recherche du mot de verrouillage de trame,
- un moyen de gestion de la transmission recevant en entrée le signal auxiliaire du démultiplexeur synchrone,
- un microprocesseur muni de mémoire vive et de mémoire morte, relié au moyen de recherche du mot de verrouillage de trame, à la base de temps et au moyen de gestion de la transmission,
- un interface utilisateur relié au microprocesseur, caractérisé en ce que la base de temps comprend :
- une base de temps rapide,
- un commutateur à deux entrées et deux sorties, le microprocesseur étant relié à une entrée dudit commutateur, la base de temps rapide à l'autre entrée dudit commutateur, ledit commutateur ayant en outre une entrée de commande gérée par le microprocesseur pour permuter les sorties,
- deux moyens de mémorisation adressés chacun par une sortie du commutateur, le moyen de mémorisation adressé par la base de temps rapide au travers du commutateur contenant la configuration de trame actuelle et étant accédée en lecture, le moyen de mémorisation adressé par le microprocesseur au travers du commutateur étant accédé en écriture pour mémoriser une nouvelle configuration de trame,

- un moyen d'élaboration des signaux d'horloge et de synchronisation recevant en entrée le contenu du moyen de mémorisation lu par la base de temps rapide.

L'invention a enfin pour objet un ensemble de multiplexage-démultiplexage à trame reconfigurable comprenant un multiplexeur conforme à la description ci-dessus, un démultiplexeur conforme à la description ci-dessus, le microprocesseur et l'interface utilisateur étant uniques et communs au multiplexeur et au démultiplexeur.

Selon un mode de réalisation préféré, dans chaque dispositif selon l'invention, chaque moyen de mémorisation est une mémoire vive.

Selon une caractéristique secondaire, dans chaque dispositif selon l'invention, les moyens de mémorisation sont identiques.

Les caractéristiques et avantages de l'invention ressortiront mieux de la description qui va suivre, donnée à titre illustratif mais non limitatif, en référence aux dessins annexés dans lesquels :

- la figure 1 représente schématiquement la structure connue d'un équipement de multiplexage,

- la figure 2 représente une structure de trame réalisée avec le multiplexeur de l'invention,

- la figure 3 représente un dessin schématique d'un mode de réalisation d'un multiplexeur selon l'invention,

- la figure 4 représente un dessin schématique détaillé de la base de temps conforme à l'invention utilisée dans le multiplexeur de la figure précédente,

- la figure 5 est un chronogramme montrant les signaux d'horloges engendrés par la base de temps pour constituer la trame,

- la figure 6 représente un dessin schématique d'un démultiplexeur selon l'invention,

- la figure 7 représente un dessin schématique d'un ensemble de multiplexage-démultiplexage selon l'invention,

- la figure 8 montre un exemple d'application d'un multiplexeur selon l'invention utilisé dans le domaine de la numérisation du réseau local,

- la figure 9 montre un exemple d'application d'un multiplexeur et d'un démultiplexeur selon l'invention, utilisé dans le domaine de la vidéocommunication.

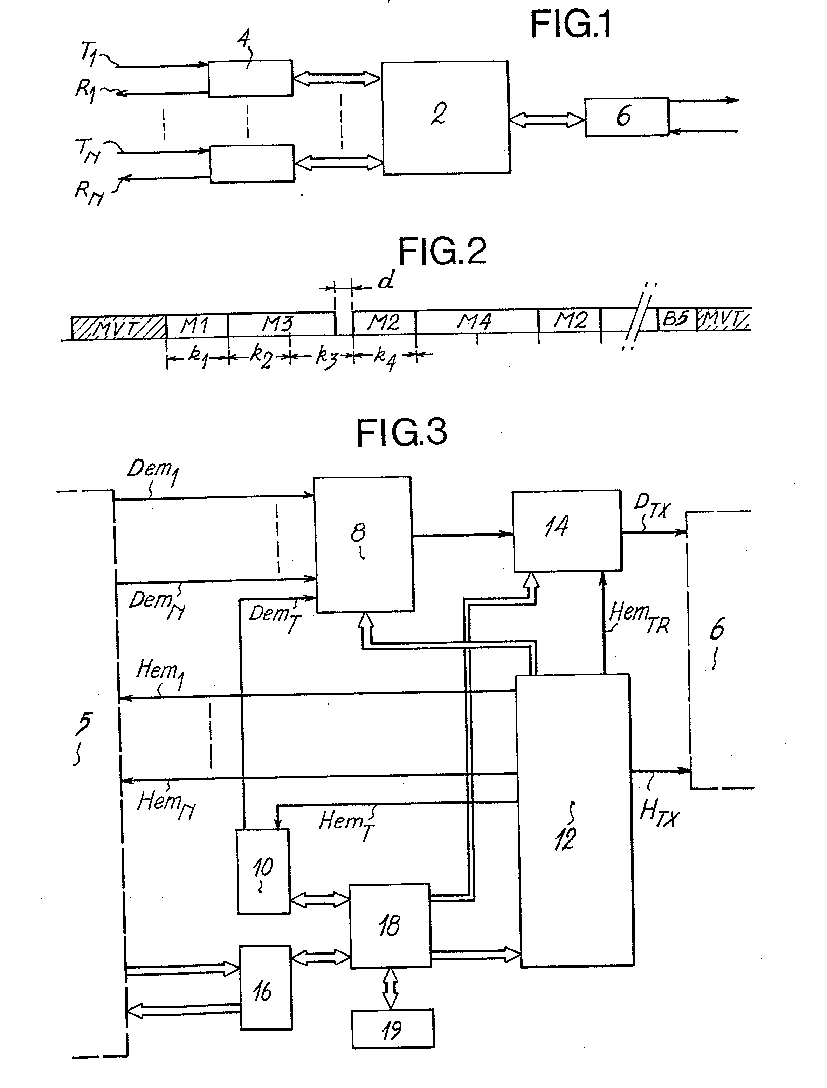

Un équipement de multiplexage peut être découpé fonctionnellement en trois parties, comme on l'a représenté sur la figure 1. Un tel équipement comprend un multiplexeur 2 relié aux canaux de transmission bas débit par des interfaces d'adaptation bas débit 4 et relié au canal de transmission haut débit par un interface d'adaptation haut débit 6. L'interface bas débit 4 est spécifique au type de câble et au code utilisé.

Pour adapter au multiplexeur 2 le signal reçu d'un canal bas débit, l'interface 4 comprend de façon classique une partie émission et une partie réception. La partie émission comprend dans le cas de multiplexage synchrone des moyens pour rechercher le mot de verrouillage de trame dans le signal $T_1$ et une mémoire tampon pour mémoriser les données extraites de cette trame. Ces données sont ensuite lues par le multiplexeur 2 à l'aide d'un signal d'horloge émis par ce multiplexeur. De manière symétrique, la partie réception de cet interface 4 comprend une mémoire tampon pour recevoir les données issues du multiplexeur et un moyen pour envoyer sous forme de trame $R_1$ les données recueillies dans cette mémoire tampon.

Dans le cas du multiplexage de signaux plésiochrones, l'interface 4 comporte à l'émission un dispositif de synchronisation par la méthode dite de la justification positive ou positive-négative et en réception un dispositif de désynchronisation.

Les connexions entre le multiplexeur 2 et chaque interface 4 comprennent notamment un canal de données pour transmettre les données de l'interface 4 au multiplexeur 2, le débit de ces données étant rythmé par un signal d'horloge transmis du multiplexeur 2 à l'interface 4, un canal de donnée pour transmettre les données du multiplexeur 2 à l'interface 4, le débit de ces données étant rythmé par un autre signal d'horloge transmis du multiplexeur 2 à l'interface 4. D'autres connexions pour véhiculer des signaux de synchronisation, de présence signal ou d'alarmes existent. Dans les équipements de multiplexage connus, les multiplexeurs 2 reçoivent sur les canaux à bas débit ou sur le canal à haut débit, des signaux dont le débit est fixe par construction, ces signaux pouvant d'ailleurs être de débits différents selon les canaux.

Le multiplexeur selon l'invention apporte une plus grande souplesse aux équipements de multiplexage. En effet, dans un multiplexeur selon l'invention, le débit des canaux à bas débit et du canal à haut débit, ne sont pas fixés par construction mais sont paramétrables. Cette paramétrisation peut être effectuée automatiquement si chacun des canaux véhicule un signal d'horloge en même temps que son signal de données. Cette paramétrisation peut être aussi effectuée directement par l'utilisateur.

On a représenté sur la figure 2, une structure de trame obtenue avec un multiplexeur selon l'invention. Cette trame est, de façon classique, constituée d'un mot de verrouillage de trame suivi de blocs
de données et d'un bloc de service. Dans le cas de la
figure, le bloc de service BS est unique et est placé
à la fin de la trame. Le débit et la position de ce
bloc de service sont choisis par l'utilisateur. Ce
bloc de service véhicule des informations pour gérer
la transmission de la trame ainsi que des informations
d'exploitation d'alarme, surveillance vers l'équipement distant. Ces informations sont par exemple du
type procédure HDLC (High Level Data Link control).
Outre le système de détection d'erreurs performant
incorporé dans cette procédure, le choix d'une procédure HDLC permet d'utiliser en partie, le multiplexeur-démultiplexeur à trame reconfigurable dans des
applications de multiplexage statistique de trame HDLC.
Le bloc de service devient un bloc de données HDLC
provenant du multiplexage statistique de données HDLC
des canaux bas débits. On peut citer comme application
la numérisation du réseau local au débit de
144 kbit/s.

La zone réservée aux données est découpée en
blocs $K_1$, $K_2$,... $K_N$ de longueurs identiques. La longueur de ces blocs de données est définie par l'utilisateur, et peut être comprise par exemple entre 1 et
10 éléments binaires. Ces blocs de données vont être
remplis par des paquets de données $M_1$, $M_2$, $M_3$, etc...
provenant des canaux à bas débit de débits quelconques. La longueur de ces paquets peut également être
programmée par l'utilisateur. Cette longueur est quelconque mais il apparaît clairement que le taux de remplissage dans la trame est maximum si la longueur de
chaque paquet est un multiple de la longueur des blocs
de données. Si tel n'est pas le cas, et ceci peut
notamment être dû au débit particulier d'un canal bas

0125168

débit, il apparaît une perte telle que d dans la trame.

L'allocation des blocs de données aux paquets de données peut se faire de manière dynamique ou statique selon la programmation du multiplexeur. Lorsqu'un canal bas débit ne transmet pas de données, on peut insérer dans la trame un paquet de données, correspondant à ce canal, constitué de données de remplissage. On peut également choisir de ne pas insérer de paquets concernant ce canal. Ce dernier cas est intéressant puisqu'il permet d'optimiser le débit résultant en ne transmettant les données que des canaux effectivement actifs. Ce mode de fonctionnement est dit "mode concentrateur". On voit donc que la structure de la trame est affectée notamment par l'insertion ou l'extraction d'un canal à bas débit. Cette trame est obtenue par un multiplexeur à trame reconfigurable selon l'invention, décrit à la figure 3.

Le multiplexeur à trame reconfigurable représenté sur cette figure comprend un multiplexeur synchrone 8 qui reçoit sur N entrées des signaux de données $Dem_1 \ldots Dem_N$ provenant de N canaux à bas débit provenant de l'interface 5 symbolisant l'ensemble des interfaces bas débit. Le multiplexeur synchrone 8 reçoit également sur une autre entrée un signal $Dem_T$ délivré par un moyen 10 de gestion de la transmission. Les informations de gestion de la transmission qualifient la structure de trame adoptée, c'est-à-dire les numéros et débits des voies composantes dont les données utilisent les blocs $K_i$, où $1 \leq i \leq N$. Le flux des données arrivant sur les entrées du multiplexeur 8 est réglé par des signaux d'horloge $Hem_1 \ldots Hem_N$, $Hem_T$ qui sont engendrés par une base de temps 12 et appliqués à l'interface 5. Les données $Dem_1 \ldots Dem_N$ sont découpées par les signaux d'horloge $Hem_1, \ldots Hem_N$ en paquets qui

B 7839-C  BL

occuperont les blocs de données de la trame. Le signal $Dem_T$ sera validé dans le bloc de service de la trame par le signal d'horloge $Hem_T$.

La base de temps 12 délivre également des signaux sur des entrées de commande du multiplexeur 8 pour commuter l'un des canaux d'entrée sur la sortie de ce multiplexeur, ce qui détermine l'ordre dans lequel les paquets de données figurent dans la trame. La base de temps 12 émet enfin un signal d'horloge $Hem_{TR}$ vers un moyen 14 d'insertion d'un mot de verrouillage de trame situé, sur la figure, en aval du multiplexeur synchrone 8 et un signal $H_{TX}$, signal d'horloge dont la fréquence est égale au débit du signal $D_{TX}$ de données multiplexées émis vers l'interface haut débit 6. La structure du mot de verrouillage de trame (longueur et contenu binaire) est définie par programmation de quelques paramètres de manière à s'adapter aisément à n'importe quelle structure de trame normalisée ou non. Il est bien connu de l'homme de l'art que l'insertion du mot de verrouillage de trame peut également être réalisé avant le multiplexage des données, une fraction du mot de verrouillage de trame pouvant alors être insérée dans chaque canal bas débit. De manière générale, on ne sort pas du domaine de l'invention en utilisant tout moyen d'insertion de verrouillage de trame connu.

Le multiplexeur à trame reconfigurable comprend également un moyen de surveillance 16 pour surveiller l'état des canaux à bas débit et l'état du multiplexeur à trame reconfigurable. Ce moyen de surveillance 16 émet vers les canaux à bas débit des signaux de surveillance de ces canaux pour surveiller la perte de mots de synchronisation, des manques de signaux, la mesure du taux de justification. Il reçoit des interfaces bas débit des signaux tels que présence de chaque canal, présence de signal sur chaque canal, mesure du débit du signal de chaque canal, lecture des alarmes. Il contrôle également le multiplexeur à trame reconfigurable par la mesure des fréquences des horloges $Hem_1$,... $Hem_N$, la mesure des fréquences des signaux de synchronisation, par un programme d'auto-surveillance du microprocesseur, par un "chien de garde", par un programme de surveillance distant-local (avec la trame HDLC). Le signal de présence de signal est notamment utilisé en mode concentrateur pour déterminer la présence dans la trame du canal bas débit correspondant. L'ensemble du multiplexeur à trame reconfigurable est piloté par un microprocesseur 18 commandant le moyen 10 de gestion de la transmission, la base de temps 12, le moyen 14 d'insertion ou de verrouillage de trame, et communiquant avec le moyen de surveillance 16 et un interface utilisateur 19.

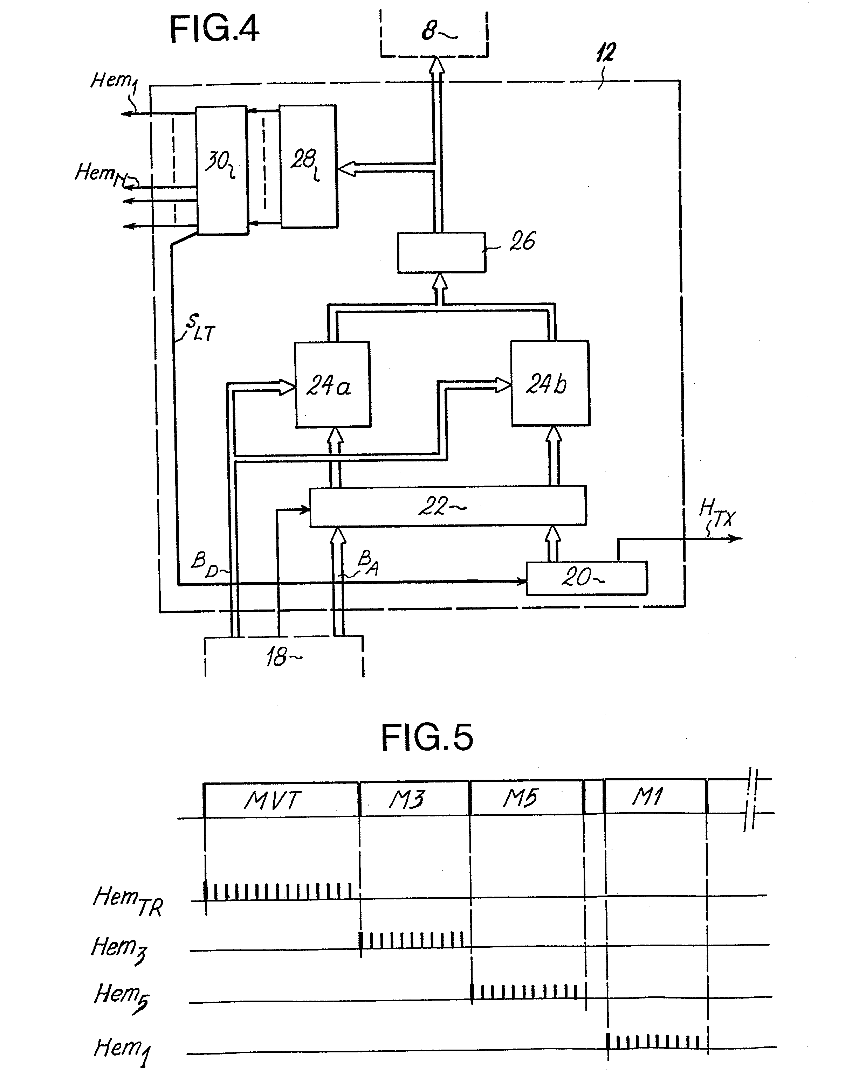

La trame est configurée par la base de temps 12. En particulier, les signaux d'horloge $Hem_1$... $Hem_N$, $Hem_T$ et $Hem_{TR}$ valident respectivement les signaux $Dem_1$,... $Dem_N$, $Dem_T$ et le mot de verrouillage de trame. Les signaux d'horloge précités déterminent également la longueur des mots ou paquets de données dont la trame est composée. L'ordre dans lequel ces mots sont présents dans la trame est quant à lui déterminé par les signaux de commande appliqués par la base de temps 12 sur une entrée de commande du multiplexeur synchrone 8. Lorsque l'on désire modifier la trame, par exemple en mode concentrateur si l'utilisateur d'un canal à bas débit se déconnecte, il faut modifier certains signaux d'horloge et de commande issus de la base de temps 12. La structure de la base de temps 12 représentée schématiquement sur la figure 4 permet de comprendre comment l'on peut modifier la trame.

La base de temps 12 comprend une base de temps rapide 20 qui délivre le signal d'horloge $H_{TX}$

dont la fréquence correspond au débit du signal multiplexé. Cette base de temps rapide 20 est également connectée sur l'une des entrées d'un commutateur 22 à deux entrées et deux sorties. Le bus d'adresses $B_A$ du microprocesseur 18 est relié à l'autre entrée du commutateur 22. Chacune des sorties de ce commutateur 22 est reliée à une mémoire vive 24a et 24b par des liaisons permettant d'adresser ces mémoires vives. Par ailleurs, le bus de données $B_D$ du microprocesseur 18 est relié à chacune des mémoires vives 24a et 24b.

C'est dans ces deux mémoires vives que sont codées les configurations de trame. L'une des mémoires, par exemple la mémoire vive 24a, contient la configuration de trame actuelle, c'est-à-dire utilisée au temps considéré et l'autre mémoire vive 24b, contient une future configuration de trame. Le commutateur 22 est positionné de telle sorte que la base de temps rapide 20 lise la mémoire contenant la configuration de trame actuelle pour engendrer les signaux d'horloge qui permettront d'élaborer cette trame. Pendant ce temps, le microprocesseur 18 relié à l'autre mémoire vive, écrit dans cette mémoire des données correspondant à une nouvelle configuration de trame.

Les données lues par la base de temps 20 dans la mémoire contenant la configuration actuelle, sont mises en forme par un moyen 26 qui délivre des signaux au multiplexeur synchrone 8 d'une part et à un moyen 28 d'élaboration des signaux d'horloge d'autre part. Les signaux délivrés au multiplexeur synchrone 8 sont les signaux de commande qui permettent de relier une voie d'entrée du multiplexeur synchrone 8 à sa voie de sortie. La structure du moyen d'élaboration 28 des signaux d'horloge dépend bien sûr de la manière dont la configuration de trame est mémorisée dans les mémoires vives. A titre d'exemple, on va décrire un moyen d'élaboration 28 comprenant un décodeur en relation avec une forme particulière de codage de la configuration de trame dans les mémoires vives.

Chaque mémoire vive contient au moins $L_T$ mots de $\underline{p}$ éléments binaires chacun où $L_T$ est la longueur maximale de la trame et $\underline{p}$ est telle que $2^p$ est supérieur ou égal au nombre N de canaux à bas débit. Chacun des mots de la mémoire vive correspondant à la configuration actuelle va être lu successivement par la base de temps rapide. Chacun de ces mots est appliqué à l'entrée du moyen d'élaboration 28 et engendre une impulsion sur l'un des signaux d'horloge qui correspond à l'un des éléments binaires de la trame. Par exemple, si la trame a un mot de verrouillage de trame de longueur $\underline{1}$ éléments binaires, les $\underline{1}$ premiers mots de la mémoire vive lus par la base de temps rapide 20 et appliqués sur les entrées du moyen d'élaboration 28 se traduisent en sortie de ce moyen d'élaboration 28 et après mise en forme par un moyen 30, par un signal d'horloge $Hem_{TR}$ comprenant $\underline{1}$ impulsions successives qui valident les $\underline{1}$ éléments binaires du mot de verrouillage de trame dans la trame. Le moyen d'élaboration 28 comprend donc en entrée un décodeur à $\underline{p}$ entrées et N sorties. Il peut comprendre après ce décodeur d'autres moyens pour réaliser des signaux de synchronisation à partir des signaux d'horloge élaborés. Parmi ceux-ci, le signal de synchronisation en trame $S_{LT}$ est appliqué sur une entrée de la base de temps rapide 20. Ce signal dépend de la longueur de la trame qui est choisie par l'exploitant.

Pendant que la base de temps rapide 20 lit une des mémoires vives pour engendrer des signaux d'horloge qui permettent d'émettre une trame, le microprocesseur 18, s'il y a lieu de modifier la configuration de la trame, chargera dans l'autre mémoire

B 7839-C BL

vive au moyen de son bus de données $B_D$ une nouvelle configuration de trame. Cette configuration pourra différer de la configuration actuelle par la position dans la trame des mots de données correspondant à chaque canal à bas débit, éventuellement la longueur de la trame $L_T$, la longueur des blocs de données $K_1$... $K_N$.

Cet équipement de multiplexage-démultiplexage peut donc engendrer n'importe quelle trame à structure fixe (trames normalisées) ou une trame reconfigurable dans les modes de fonctionnement multiplexeur ou concentrateur, ou les deux à la fois, certains canaux bas débits pouvant être multiplexés temporellement, d'autres concentrés, au choix de l'utilisateur.

On a représenté sur la figure 5, un exemple de quelques signaux d'horloge engendrés par la base de temps 12 de la figure précédente. La trame est symbolisée par une succession de blocs comprenant un mot de verrouillage de trame MVT, un mot $M_3$ correspondant à des données venant du canal à bas débit n°3, un mot $M_5$, un mot $M_1$. Pendant la période de temps pendant laquelle le signal d'horloge $Hem_{TR}$ délivre des impulsions, le mot de verrouillage de trame est émis sur la ligne multiplexée en synchronisme avec ces impulsions. De même, le mot $M_3$ est émis en synchronisme avec les impulsions du signal d'horloge $Hem_3$. Les autres mots $M_5$ et $M_1$ sont émis de la même manière.

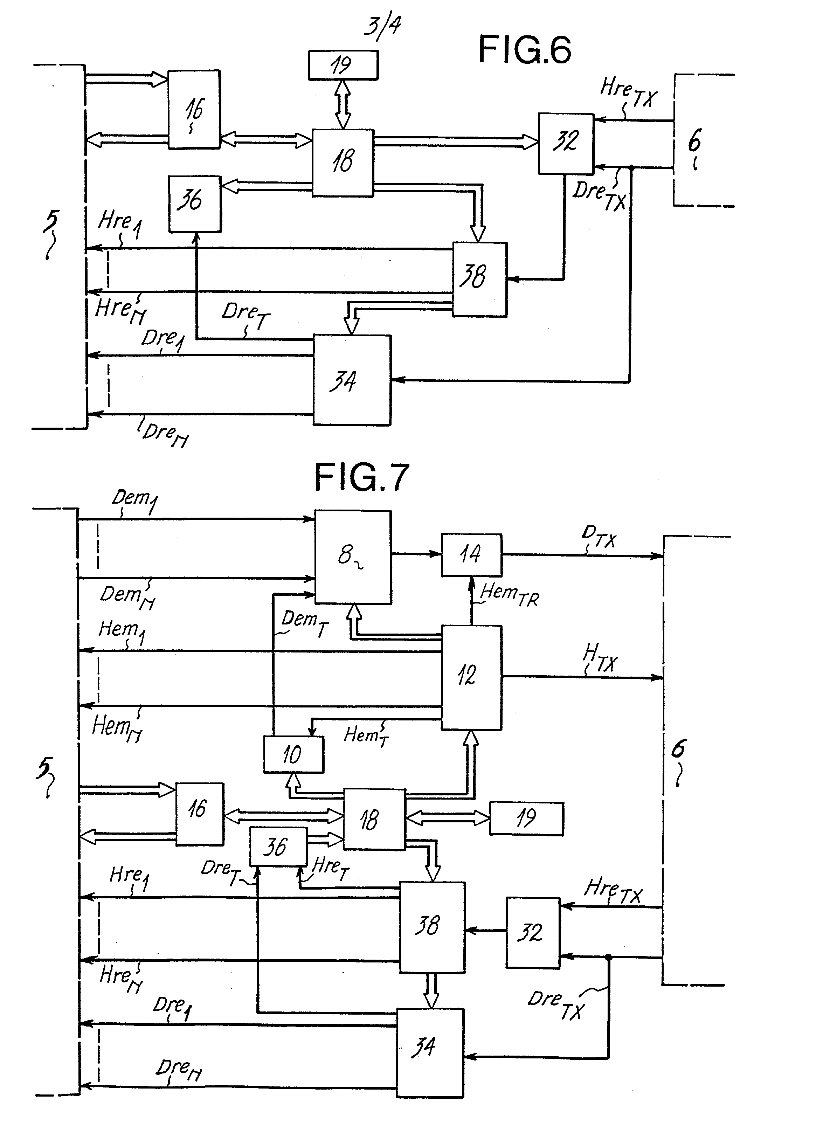

On a décrit, en référence aux figures 3 et 4, un multiplexeur à trame reconfigurable selon l'invention. Il est clair que la base de temps, décrite en référence à la figure 4, utilisée dans le multiplexeur et permettant la reconfiguration de la trame peut également être utilisée dans un démultiplexeur à trame reconfigurable. La figure 6 représente un schéma d'un tel démultiplexeur. La structure de ce démultiplexeur est identique à celle du multiplexeur décrite en référence aux figures précédentes.

Ce démultiplexeur comprend un microprocesseur 18 communiquant avec un moyen de surveillance 16 et un interface utilisateur 19. Ce microprocesseur 18 est également relié à un moyen 32 de détection et reconnaissance d'un mot de verrouillage de trame, à une base de temps et à un moyen 36 de gestion de la transmission. Le démultiplexeur à trame reconfigurable comprend enfin un démultiplexeur synchrone 34 recevant en entrée un signal multiplexé $Dre_{TX}$ et délivrant des signaux composants extraits de cette trame $Dre_1$... $Dre_N$ et $Dre_T$. Les N premiers signaux précités sont recueillis par l'interface 5. Chacun de ces signaux correspond à un canal à bas débit. Le dernier signal précité $Dre_T$ est appliqué à l'entrée du moyen 36 de gestion de la transmission. La commutation du signal multiplexé $Dre_{TX}$ présent en entrée du démultiplexeur synchrone 34 sur l'une des sorties précitées se fait par des entrées de commande gérées par la base de temps 38. Cette base de temps 38 délivre également des signaux d'horloge $Hre_1$... $Hre_N$ dont les fréquences sont respectivement égales au débit des signaux $Dre_1$... $Dre_N$. Ces signaux d'horloge sont également appliqués à l'entrée de l'interface à bas débit 5. La base de temps 38 émet également un signal $Hre_T$ appliqué à l'entrée du moyen 36 de gestion de la transmission et dont la fréquence est égale au débit du signal $Dre_T$. La synchronisation de la base de temps 38 est réalisée par un signal issu du moyen 32 de détection et de reconnaissance du mot de verrouillage de trame. Le moyen de surveillance 16 qui échange des informations avec l'interface à bas débit 5 d'une part et avec le microprocesseur 18 d'autre part, est identique à celui décrit dans le multiplexeur à trame reconfigurable de la figure 3.

Comme dans le multiplexeur à trame reconfigurable, le microprocesseur 18 a notamment pour rôle de coder dans une mémoire vive contenue dans la base de temps une nouvelle configuration de trame, la configuration de trame actuelle étant codée dans une autre mémoire vive de cette même base de temps 38 et étant lue par une base de temps rapide.

On a représenté sur la figure 7, un ensemble de multiplexage-démultiplexage à trame reconfigurable. Cet ensemble peut être découpé fonctionnellement en deux parties : un multiplexeur à trame reconfigurable identique à celui représenté sur la figure 3 et un démultiplexeur à trame reconfigurable identique à celui représenté sur la figure 6. Certains des circuits tels que le microprocesseur 18, l'interface utilisateur 20 et le moyen de surveillance 16 sont communs aux deux parties. On ne reprendra pas le détail de la description de cette figure qui se déduit aisément des figures 3 et 6, chacune des bases de temps 12 et 38 commandant l'une le multiplexeur synchrone 8 et l'autre le démultiplexeur synchrone 34, a une structure identique à la base de temps représentée sur la figure 4.

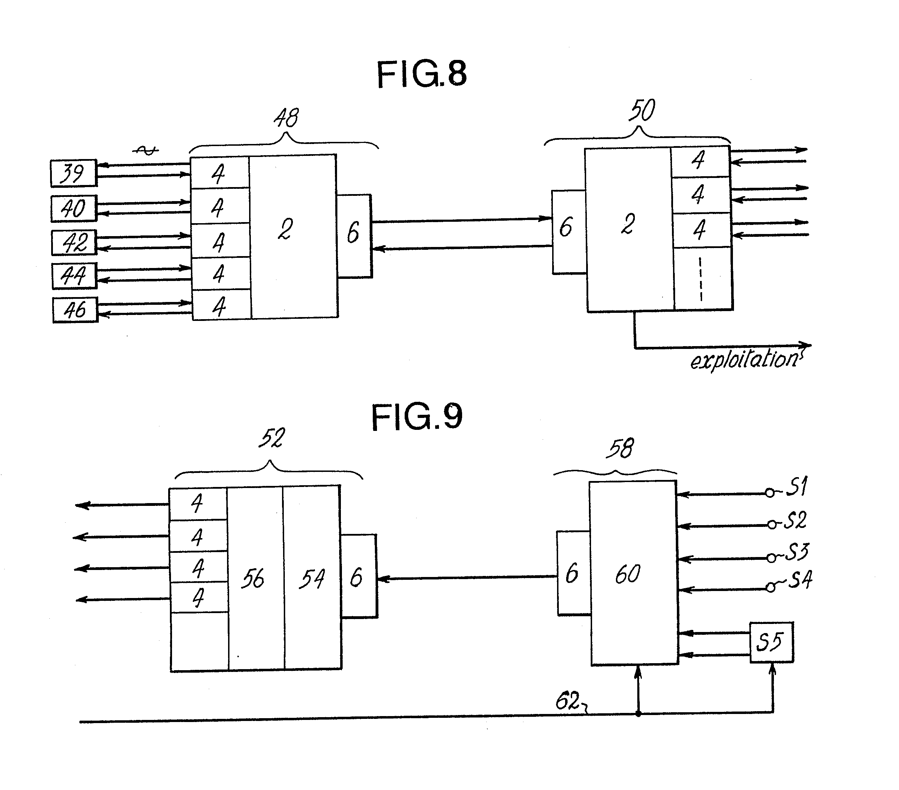

La figure 8 représente un exemple d'utilisation de deux ensembles de multiplexage-démultiplexage à trame reconfigurable, dans le cadre de la numérisation du réseau local. Les canaux composants ont des débits normalisés. Par exemple, un canal transmettant des données vers un moyen 40 a un débit de 64 kbit/s, un canal relié à un téléphone 42 et transportant un signal analogique codé et une signalisation a un débit de 72 kbit/s, des canaux reliés à des terminaux d'abonnés 44 et 46 ont des débits de 80 ou 144 kbit/s. Il peut aussi y avoir des moyens analogiques tels qu'un téléphone 39 dont l'information est codée directement

B 7839-C BL

dans l'équipement distant 48. Le débit résultant du signal émis par l'équipement distant 48 peut être de 704, 1544, 2048 kbit/s ou plus selon les canaux composants connectés. L'équipement local 50 gère la structure de trame, les fonctions d'exploitation relatives à l'ensemble formé par la liaison haut débit, le multiplexeur-démultiplexeur distant et les liaisons et régies d'abonnés distantes. L'équipement local 50 transmet au moyen de blocs de données de service insérées dans la trame tout débit, vers l'équipement distant 48, les caractéristiques de la structure de trame adoptée et éventuellement des informations d'exploitation. Par l'intermédiaire de ces mêmes blocs de données de service, l'équipement distant 48 informe dans l'autre sens l'équipement local 50 des caractéristiques des canaux bas débits connectés (débit, alarme, présence signal,...).

La figure 9 présente une application de multiplexeur-démultiplexeur à trame reconfigurable dans le cadre de la distribution de canaux de télévision et de son haute fidélité codés numériquement. Dans cet exemple, la liaison est unidirectionnelle. Certains canaux $S_1,...$ $S_4$ de télévision ou de son haute fidélité sont multiplexés en permanence de manière à être commutés dans l'équipement distant 52 vers le ou les abonnés demandeurs. Cet équipement distant comprend notamment un sous-ensemble de multiplexage 54 conforme à celui de la figure 6 et une unité de connexion multipoint 56. D'autres programmes de télévision et de son haute fidélité, issus d'un moyen 55 et choisis par certains abonnés, peuvent être concentrés dans la trame haut débit par le moyen 60 conforme au multiplexeur-concentrateur de la figure 3, puis commutés dans l'équipement distant 52. Les débits en présence peuvent atteindre le gigabit par seconde.

Dans cet exemple, l'équipement local 58 reçoit une commande externe 62 résultant des signalisations des différents abonnés. L'équipement local 58 transmet à l'équipement distant 52, à l'aide des blocs de données de service insérés dans la trame haut débit, les caractéristiques de la structure de trame adoptée ainsi que les ordres de commutation à effectuer.

**0125168**

REVENDICATIONS

1. Multiplexeur à trame reconfigurable, ladite trame comprenant un mot de verrouillage de trame, des blocs de données et un bloc de service, ledit multiplexeur comprenant :

- un multiplexeur synchrone (8) recevant sur N entrées un nombre N de canaux à bas débit de débits quelconques et délivrant sur un canal de sortie un signal multiplexé,

- un moyen (14) d'insertion d'un mot de verrouillage de trame situé en aval du multiplexeur synchrone,

- une base de temps (12) délivrant des signaux d'horloge et de synchronisation au multiplexeur synchrone et au moyen d'insertion d'un mot de verrouillage de trame,

- un moyen de surveillance (16) pour surveiller l'état des voies composantes et l'état du multiplexeur à trame reconfigurable,

- un moyen (10) de gestion de la transmission appliquant un signal sur une entrée du multiplexeur synchrone, ledit signal occupant le bloc de service dans la trame,

- un microprocesseur (18) muni de mémoire vive et de mémoire morte, relié au moyen de surveillance, au moyen d'insertion du mot de verrouillage de trame, à la base de temps et au moyen de gestion de la transmission,

- un interface utilisateur (19) relié au microprocesseur,

caractérisé en ce que la base de temps comprend :

- une base de temps rapide (20),

- un commutateur (22) à deux entrées et deux sorties, le microprocesseur (18) étant relié à une entrée dudit commutateur, la base de temps rapide (20) à l'autre entrée dudit commutateur, ledit commutateur

B 7839-C  BL

ayant en outre une entrée de commande gérée par le microprocesseur (18) pour permuter ses sorties,

- deux moyens de mémorisation (24a et 24b) adressés chacun par une sortie du commutateur (22), le moyen de mémorisation adressé par la base de temps rapide (20) au travers du commutateur (22) contenant la configuration de trame actuelle et étant accédé en lecture, le moyen de mémorisation adressé par le microprocesseur (18) au travers du commutateur (22) étant accédé en écriture pour mémoriser une nouvelle configuration de trame,

- un moyen (28) d'élaboration des signaux d'horloge et de synchronisation recevant en entrée le contenu du moyen de mémorisation lu par la base de temps rapide (20).

2. Multiplexeur selon la revendication 1, caractérisé en ce que chaque moyen de mémorisation est une mémoire vive.

3. Multiplexeur selon l'une quelconque des revendications 1 et 2, caractérisé en ce que les deux moyens de mémorisation sont identiques.

4. Multiplexeur selon l'une quelconque des revendications 1 à 3, caractérisé en ce que le moyen d'élaboration des signaux d'horloge et de synchronisation comprend un décodeur recevant en entrée les mots mémorisés dans le moyen de mémorisation lu par la base de temps rapide.

5. Démultiplexeur à trame reconfigurable, ladite trame comprenant un mot de verrouillage de trame, des blocs de données et un bloc de service, ledit multiplexeur comprenant :

- un démultiplexeur synchrone (34) recevant en entrée un signal multiplexé et délivrant en sortie N signaux composants et un signal auxiliaire,

- un moyen (32) de recherche du mot de verrouillage de trame,

B 7839-C BL

**0125168**

- une base de temps (38) délivrant des signaux d'horloge et de synchronisation au démultiplexeur synchrone (34) et au moyen (32) de recherche du mot de verrouillage de trame,

- un moyen (36) de gestion de la transmission recevant en entrée le signal auxiliaire du démultiplexeur synchrone (34),

- un microprocesseur (18) muni de mémoire vive et de mémoire morte, relié au moyen (32) de recherche du mot de verrouillage de trame, à la base de temps (38) et au moyen (36) de gestion de la transmission,

- un interface utilisateur (19) relié au microprocesseur (18),

caractérisé en ce que la base de temps (38) comprend :

- une base de temps rapide (20),

- un commutateur (22) à deux entrées et deux sorties, le microprocesseur (18) étant relié à une entrée dudit commutateur, la base de temps rapide (20) à l'autre entrée dudit commutateur, ledit commutateur ayant en outre une entrée de commande gérée par le microprocesseur (18) pour permuter les sorties,

- deux moyens de mémorisation (24a, 24b) adressés chacun par une sortie du commutateur, le moyen de mémorisation adressé par la base de temps rapide (20) au travers du commutateur contenant la configuration de trame actuelle et étant accédée en lecture, le moyen de mémorisation adressé par le microprocesseur (18) au travers du commutateur étant accédé en écriture pour mémoriser une nouvelle configuration de trame,

- un moyen (28) d'élaboration des signaux d'horloge et de synchronisation recevant en entrée le contenu du moyen de mémorisation lu par la base de temps rapide.

6. Démultiplexeur selon la revendication 5, caractérisé en ce que chaque moyen de mémorisation est une mémoire vive.

B 7839-C  BL

7. Démultiplexeur selon l'une quelconque des revendications 5 et 6, caractérisé en ce que les deux moyens de mémorisation sont identiques.

8. Démultiplexeur selon l'une quelconque des revendications 5 à 7, caractérisé en ce que le moyen d'élaboration des signaux d'horloge et de synchronisation comprend un décodeur recevant en entrée les mots mémorisés dans le moyen de mémorisation lu par la base de temps rapide.

9. Ensemble de multiplexage-démultiplexage à trame reconfigurable comprenant un multiplexeur conforme à la revendication 1, un démultiplexeur conforme à la revendication 5, le microprocesseur et l'interface utilisateur étant uniques et communs au multiplexeur et au démultiplexeur.

10. Ensemble de multiplexage démultiplexage selon la revendication 9, caractérisé en ce que chaque moyen de mémorisation est une mémoire vive.

11. Ensemble de multiplexage-démultiplexage selon la revendication 10, caractérisé en ce que les deux moyens de mémorisation sont identiques.

12. Ensemble de multiplexage-démultiplexage selon l'une quelconque des revendications 10 et 11, caractérisé en ce que chaque moyen d'élaboration des signaux d'horloge et de synchronisation comprend un décodeur recevant en entrée les mots mémorisés dans le moyen de mémorisation lu par la base de temps rapide.

1/4

# FIG.1

# FIG.2

# FIG.3

**FIG.4**

**FIG.5**

FIG.6

FIG.7

0125168

3/4

# FIG.8

48

| 4 |
| 4 |
| 4 |
| 4 |
| 4 |

2

6

50

6

2

| 4 |
| 4 |
| 4 |

exploitation

39
40
42
44
46

# FIG.9

52

| 4 |
| 4 |
| 4 |
| 4 |

56

54

6

58

6

60

S1
S2
S3
S4

S5

62

# 0125168

Numéro de la demande

EP  84 40 0854

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 504 759 (THOMSON) <br><br> * Page 6, ligne 20 - page 71, ligne 33 * | 1,2,5, 6,9,10 | H 04 L  5/22 |
| | --- | | |
| A | REVIEW OF THE ELECTRICAL COMMUNICATION LABORATORIES, vol. 31, no. 2, 1983, pages 146-157, Tokyo, JP; T. HANAZAWA et al.: "Data channel multiplexer system design" <br> * En entier * | 1,5,9 | |
| | --- | | |
| A | COMMUTATION & TRANSMISSION, vol. 4, no. 1, mars 1982, pages 57-68, Issy-les-Moulineaux, FR; C. SAINT SUPERY et al.: "Multiplexeur télégraphique MTXD 46/50" <br> * En entier * | 1,5,9 | |
| | --- | | |
| A | N.E.C. RESEARCH AND DEVELOPMENT, no. 63, octobre 1981, pages 1-9, Tokyo, JP; S. KOIZUMI et al.: "Time division multiplexer for telegraph and data transmission" <br> * Page 5, colonne de droite, ligne 1 - page 6, colonne de droite, ligne 31 * | 1,5,9 | |
| | ---     -/- | | |

**DOMAINES TECHNIQUES RECHERCHES (Int. Cl. ³)**

H 04 J
H 04 L

Le présent rapport de recherche a été établi pour toutes les revendications

| Lieu de la recherche | Date d'achèvement de la recherche | Examinateur |
|---|---|---|
| LA HAYE | 12-07-1984 | VERSLYPE J.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82

| | **DOCUMENTS CONSIDERES COMME PERTINENTS** | | Page 2 |
|---|---|---|---|

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 222 727 (LE MATERIEL TELEPHONIQUE)<br><br>* Page 5, ligne 39 - page 7, ligne 2 * | 2,3,6, 7,10, 11 | |
| | --- | | |
| A | IBM TECHNICAL DISCLOSURE BULLETIN, vol. 23, no. 6, novembre 1980, pages 2325-2326, New York, US; D. SELLIER: "Programmable variable speed scanner"<br>* En entier * | 1,4 | |
| | ----- | | DOMAINES TECHNIQUES RECHERCHES (Int. Cl. ³) |

Le présent rapport de recherche a été établi pour toutes les revendications

| Lieu de la recherche<br>LA HAYE | Date d'achèvement de la recherche<br>12-07-1984 | Examinateur<br>VERSLYPE J.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant